# EUROPEAN PATENT APPLICATION

(11) **EP 2 680 062 A1**
(43) Date of publication of application: **01.01.2014**
(21) Application number: 13169846.6
(22) Date of filing: 30.05.2013
(51) Int. Cl.: G02F 1/1333, G02F 1/1335, G02F 1/1343

(54) **Display device**

(30) Priority: 08.06.2012 CN 201210189902
(71) Applicant: HannStar Display Corp., Wugu Dist. New Taipei City 248 (TW)
(72) Inventor: Yu, Chia-Hua, 220 Taipei County (TW); Lin, Sung-Chun, 701 Tainan City (TW); Liu, Hsuan-Chen, 802 Kaohsiung (TW)
(74) Representative: Lippert, Stachow & Partner

(57) **Abstract**

The display device includes a metal layer (M1), a common electrode (11), a pixel electrode (12), a liquid crystal layer (17) and a protective layer (15). The common electrode (11) is disposed above the metal layer (M1). The pixel electrode (12) is disposed above the common electrode (11). The liquid crystal layer (17) is disposed above the pixel electrode (12) and the common electrode (11). The protective layer (15) is disposed between the metal layer (M1) and the common electrode (11), and includes one of a color translucent material and a transparent polymer material.

## Description

The application claims the benefit of China Patent Application No. 201210189902.5, filed on June 8, 2012, at the State Intellectual Property Office of China, the disclosures of which are incorporated herein in their entirety by reference.

The present disclosure relates to a display device, especially to a liquid crystal display device with enhanced pixel aperture rate.

Currently the liquid crystal displays (LCDs) have been dominating in almost all the major display markets for several applications, such as monitors, mobile phones, televisions, notebook computers, tablet personal computers (PCs), global positioning system (GPS) devices, portable video players, etc. as the technologies of the LCD have been developing widely, deeply and quickly.

The liquid crystals play the role of light valves to control the light transmission and the light blocking at instantaneous display time in each pixel of the LCD. In view of the control mechanisms of the liquid crystals, the LCD can be divided into the types of the vertical alignment (VA) and the plane switching.

The VA type can be further divided into several sub-types. Generally, the VA type LCD has very fast response time for the liquid crystals, and is especially suitable for displaying the video showing very fast movements. However, when the user presses the LCD screen by fingers or other objects, the vortex-shaped pattern appears at the place being pressed on the screen of the LCD, because the distance interval of the vertical alignment of the liquid crystals is shortened by such vertically pressing on the screen. In this aspect, the VA LCD is not suitable to be used for the touch-panel display, since the screen of the touch-panel display tends to be frequently touched and pressed by the user's finger, and the displayed picture thereof will be blurred anywhere is being touched.

On the other hand, the plane switching type LCDs, including the in-plane switching (IPS) and the fringe field switching (FFS) LCDs, do not have this kind of problem, and provide good performance for the touch-panel display, since the liquid crystal alignments thereof occur in the plane (horizontal) direction rather than the vertical direction.

Among the markets of various liquid crystal displays, the market of smart portable devices has the highest growing rate. The smart portable devices, including smart cellular phones, portable touch pads, etc., have touch control function to afford smart controls and contents. With the rapid growth in the markets of smart phones, e.g. iPhone or smart phones under Android operation system, and portable touch pad, e.g. iPad or touch pads under Android operation system, the demand of high resolution display screens grows quickly. Besides the currently available products with the resolution of WVGA (480×800), the products with the resolutions of qHD (540×960) and HD (720×1280) will be developed. For smart portable devices, the demand for wide-view angles is gradually increased in addition to the high resolution. Thus, when the products have high-density pixels, i.e. more pixels per inch (PPI), the issue of deteriorating pixel aperture rate (pixel AR) usually comes out.

For overcoming the mentioned problems, novel products with the advantages of high pixel AR for high PPI products are provided in the present disclosure after a lot of researches, analyses and experiments by the inventors.

In accordance with one aspect of the present disclosure, a display device is provided. The display device includes a metal layer; a common electrode disposed above the metal layer; a pixel electrode disposed above the common electrode; a liquid crystal layer disposed above the pixel electrode and the common electrode; and a protective layer disposed between the metal layer and the common electrode, and including one of a color translucent material and a transparent polymer material.

In accordance with another aspect of the present disclosure, a display device is provided. The display device includes a common electrode; a pixel electrode disposed above the common electrode; a liquid crystal layer disposed above the pixel electrode and the common electrode; and a passivation layer disposed between the pixel electrode and the common electrode, and including one of a color translucent material and a transparent polymer material.

In accordance with a further aspect of the present disclosure, a display device is provided. The display device includes a common electrode; a pixel electrode disposed above the common electrode, and including plural first slits having an interval between adjacent two of the first slits, wherein each the first slits has a width and a ratio of the width to the interval, and the ratio is in a range of 0.55 to 1.35; and a liquid crystal layer disposed above the pixel electrode and the common electrode.

The above objects and advantages of the present disclosure will become more readily apparent to those ordinarily skilled in the art after reviewing the following detailed descriptions and accompanying drawings, in which:

Fig. 1A is the schematic diagram showing a top view of a display device in an embodiment of the present disclosure;

Fig. 1B is the schematic diagram showing a cross-sectional view of the display device along the A-A cutting line in Fig. 1A in an embodiment of the present disclosure;

Fig. 2A is the schematic diagram showing a top view of a display device in an embodiment of the present disclosure;

Fig. 2B is the schematic diagram showing only the pixel electrode in Fig. 2A in an embodiment of the present disclosure; and

Fig. 2C is the schematic diagram showing only the common electrode in Fig. 2A in an embodiment of the present disclosure.

The present disclosure will now be described more specifically with reference to the following embodiments. It is to be noted that the following descriptions of preferred embodiments of this disclosure are presented herein for the purposes of illustration and description only; it is not intended to be exhaustive or to be limited to the precise form disclosed.

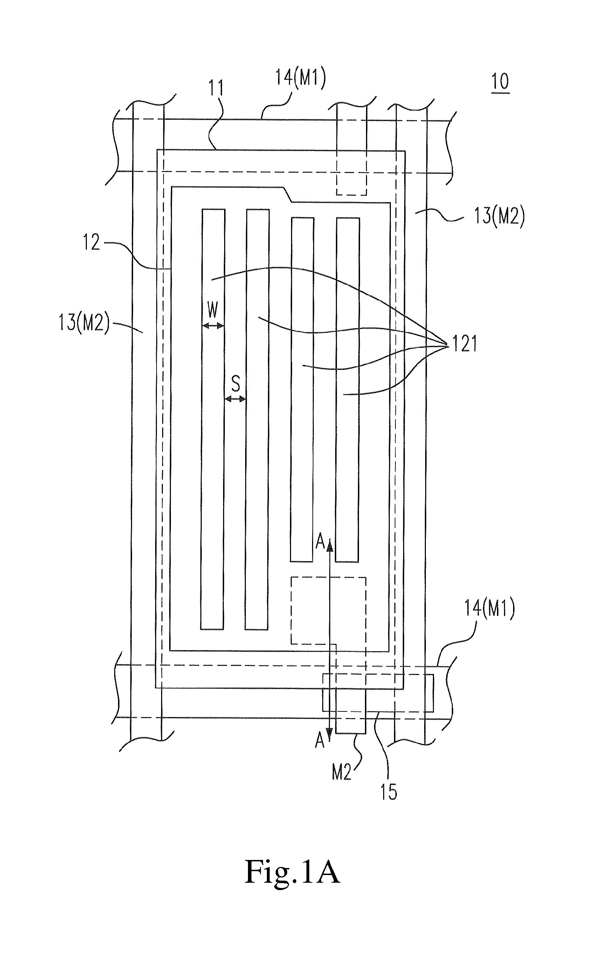

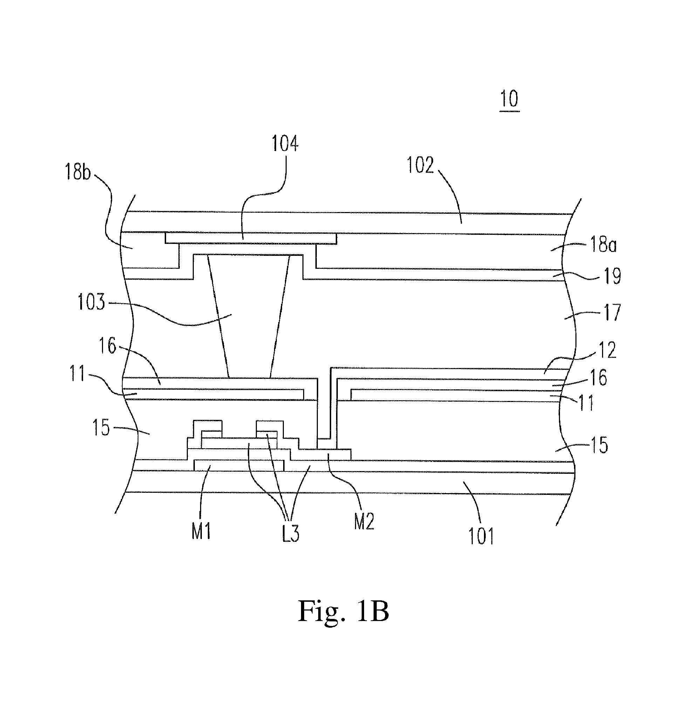

See Figs. 1A and 1B. Fig. 1A shows a top view of a display device in an embodiment of the present disclosure, and Fig. 1B shows a cross-sectional view of the display device along the A-A cutting line in Fig. 1A. In Figs. 1A and 1B, a display device 10 includes a common electrode 11, a pixel electrode 12, a liquid crystal layer 17 and a passivation layer 16. The pixel electrode 12 is disposed above the common electrode 11. The liquid crystal layer 17 is disposed above the pixel electrode 12 and the common electrode 11. The materials of the common electrode 11 and the pixel electrode 12 can selectively be transparent conductive materials, e.g. in indium oxide (ITO). Since the quantity of he liquid crystals in the liquid crystal layer are mammoth, the liquid crystals are not shown in the figures for the concern of clarity. The display device 10 can be a plane switching display, e.g. IPS or FFS type liquid crystal display.

The display device 10 in Figs. 1A and 1B can further optionally include a data line 13, a gate line 14 and a thin film transistor (TFT) 15, a bottom substrate 101, a top substrate 102, a spacer 103, a black matrix layer 104, color filter layers 18a and 18b and a transparent conductive layer 19. In Fig. 1B, the M1 layer is so-called first metal layer in this field, since it is a first metal layer being coated. The M1 layer can be patterned through photolithography processes to form the gate line 14 in Fig. 1A. There are three layers above the M1 layer, and these three layers are generally called L3 layers, which constitute the structure of semiconductor layer and insulator layer in thin film transistor 15. There exist a M2 layer disposed above the L3 layers, and the M2 layer is so-called second metal layer, which can be patterned through photolithography processes to form the data line 13 in Fig. 1A and the structures of source electrodes and drain electrodes in the thin film transistor 15 indicated with the reference numeral M2 in Fig. 1B.

In some embodiments, since the pixel electrode 12 is disposed above the common electrode 11, the pixel electrode 12 is farther away from the data line 13 formed from the M2 layer below. Therefore, the pixel electrode 12 is no longer susceptible to the electrical interference from the data line 13, and the area of the pixel electrode 12 is able to expand. As observable from the top view in Fig. 1A, the projection of the profile of the pixel electrode 12 is quite close to the data line 13. Since the data line 13 is formed from the M2 layer, the data line 13 is opaque. Accordingly, when the area of the pixel electrode 12 is expanding close to the data line 13, the pixel aperture rate is increasing to a limit, and this design is especially suitable for high-end display devices, e.g. iPhone, with high PPI, i.e. extremely high fidelity resolutions. Therefore, the display devices in the above embodiments are able to enhance the pixel aperture rates effectively.

In some embodiments, the projection of the common electrode 11 partially overlaps the data line 13, the gate line 14 and the TFT 15 as shown in Fig. 1A. That is, the common electrode 11 can extend its area outwardly as well. In this condition, the common electrode 11 can have the shielding effect so that the pixel electrode 12 would not be affected to generate undesired interference mura by the capacitance-coupled effect from the data line 13, the gate line 14 and the TFT 15.

On the other hand, in another embodiment, the projection of the common electrode 11 can partially overlap the data line 13 and the TFT 15 without overlapping the gate line 14 so as to reduce the RC loading of the common electrode 11.

In the embodiments show in Fig. 1B, liquid crystals exist in the liquid crystal layer 17 supported by the spacer 103, which is disposed right below the black matrix layer 104 so there is no light leaking. The adjacent color filter layers 18a and 18b, which are formed by two color filter layers with different colors, can be optionally disposed between the second substrate 102 and the transparent conductive layer 19. Generally, the color filter layers are usually formed by the pigments of three prime colors, i.e. red, green and blue colors, and each pixel consists of three sub-pixels with respective red, green and blue colors and undergoes light mixing by mixing the light from the three sub-pixels with assigned relative light intensities so as to display the desired color, since the size of the pixel is smaller than the resolution distance limit of human eyes. Besides three colors of red, green and blue ones, four colors of red green, blue and yellow ones can also be adopted to enhance the color saturation rate. In addition, cyan and magenta light can be optionally added as well to enhance the color saturation, where the yellow, cyan and magenta colors are the complementary colors of blue, red and green colors, respectively.

In some embodiments, the material of the protecting layer 15 disposed between the common electrode 11 and the lower metal layer (M2 layer) or L3 layer can be replaced with color translucent material, i.e. the material of the color filter layer, in the structure of the display device without the color filter layers 18a and 18b shown in Fig. 1B. In such conditions, the protecting layer 15 can have the function of filtering the complementary color light to allow the light of three prime colors to pass, and can simultaneously have insulation function. Accordingly, the entire thickness will be reduced since the color filter layers 18a and 18b shown in Fig. 1B are absent.

Besides the above mentioned technical scheme by replacing the material of the protecting layer 15 with color translucent material, the material of other layer can optionally be replaced with color translucent material in stead. In some embodiments, the material of the passivation layer 16 disposed between the common electrode 11 and the pixel electrode 12 can be replaced with color translucent material, i.e. the material of the color filter layer, in the structure of the display device without the color filter layers 18a and 18b shown in Fig. 1B. In such conditions, the passivation layer 16 can have the function of filtering the complementary color light to allow the light of three prime colors to pass, and can simultaneously have function of forming the electrical field between the common electrode 11 and the pixel electrode 12 for driving liquid crystals. Accordingly, the entire thickness will be reduced, since the color filter layers 18a and 18b are absent, either. In the present and previous two paragraphs, the transmittance of the color translucent material or pigment is in a range of 10 to 60%, and the thickness thereof is in a range of 1 to 5 micron.

Conventionally, the material of the protecting layer 15 and the passivation layer 16 is selected from metal oxide or metal nitride. In the present disclosure, the polymer material with high transparency, including poly(methyl methacrylate) (PMMA), polycarbonate or poly(ethylene terephthalate), can be selectively used as the material of the protecting layer 15 and the passivation layer 16 besides the conventional metal oxide or metal nitride or the above-mentioned color translucent material in the previous three paragraphs. In such conditions, the planarization of the whole surface can be reached as long as at least one the protecting layer 15 and the passivation layer 16 is made of the above transparent polymer.

In Fig. 1A, the pixel electrode 12 includes plural slits 121. The width of each of the slits 121 is W, and the interval between any adjacent two slits of the slits 121 is S. The ratio of W to S, i.e. W/S, is in a range of 0.55 to 1.35, in a range of 0.85 to 1.25 in some embodiments, and in a range of 1.1 to 1.2 in other embodiments. Certainly, the ratio can be appropriately tuned based on the practical requirements within the concept of the present disclosure.

In some embodiments of Figs. 1A and 1B, the upper pixel electrode 12 includes plural slits 121; while the lower common electrode 11 has no slit and is a rectangular planar electrode.

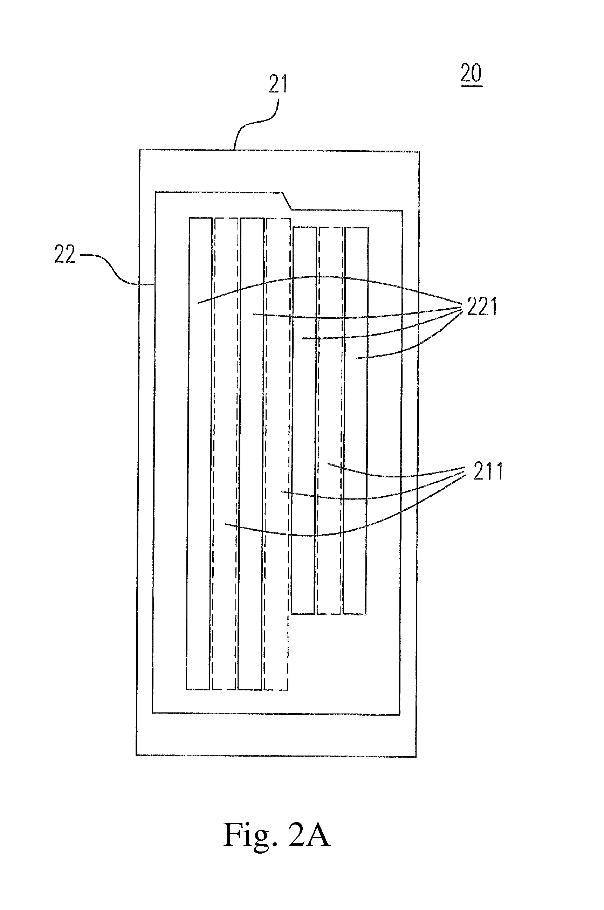

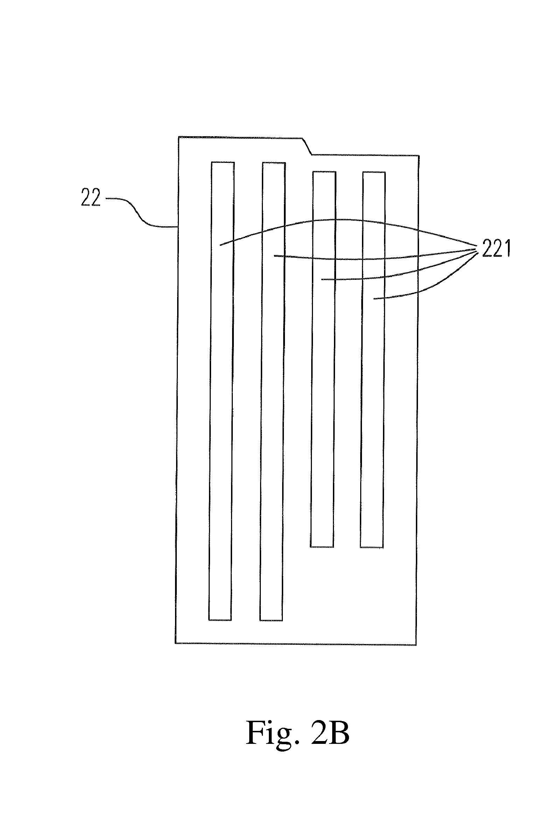

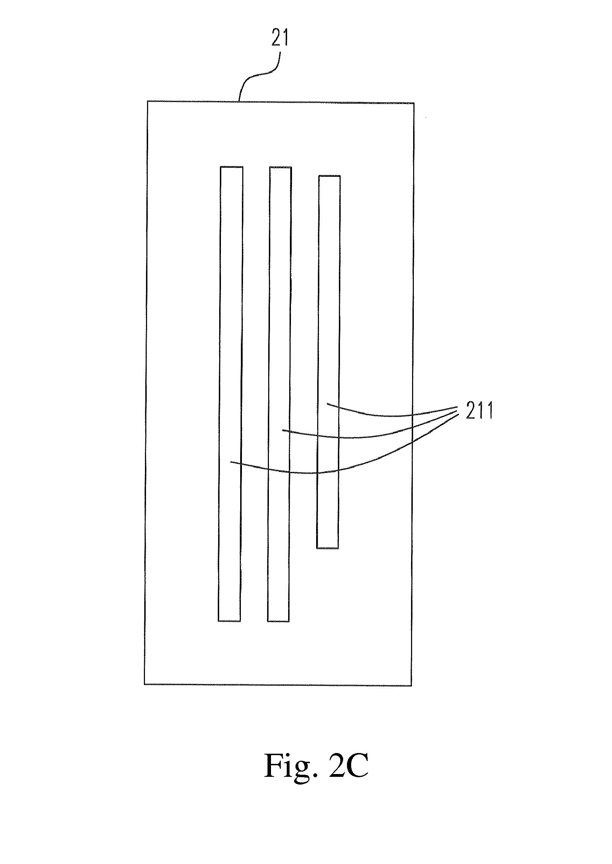

See Fig. 2A, which shows a top view of a display device in some embodiments of the present disclosure. In Fig. 2A, the display device 20 includes the upper pixel electrode 22 and the lower common electrode 21, but does not show other elements as the concern of the clarity. The pixel electrode 22 includes plural first slits 221, the common electrode 21 includes plural second slits 211, and the projection of the first slits 221 onto the common electrode 21 is located outside the second slits 211. Fig. 2B only shows the pixel electrode 22 of Fig. 2A, but does not show the common electrode 21 of Fig. 2A; while Fig. 2C only shows the common electrode 21, but does not show the pixel electrode 22 of Fig. 2A. Thus, by comparing Fig. 2A with Figs. 2B and 2C, the relative location relationship between the first slits 221 and the second slits 211 can be clearly recognized.

For better illustrating the advantages resulting from the techniques of the present disclosure in contrast with those of the prior arts, the values of pixel aperture rates of the present disclosure and those of the best prior technique, i.e. IPS-pro, are listed in Table 1 below for the comparison.

**Table 1**

| Panel Type | PPI | Aperture rates of IPS-pro | Aperture rates of present disclosure | Enhanced rates of present disclosure |
|---|---|---|---|---|
| 4.3" WVGA (39×117) | 217 | 48.78% | 60.04% | 23.08% |
| 4.3" qHD (33×99) | 256 | 44.18% | 59.34% | 34.31% |
| 5.3" HD (29.75×89.25) | 285 | 39.09% | 47.53% | 21.59% |
| 5" HD (28.25×84.75) | 300 | 36.59% | 44.74% | 22.27% |
| 4.7" HD (26.25×78.25) | 323 | 33.00% | 40.52% | 22.79% |
| 4.3" HD (24.75×74.25) | 342 | 24.88% | 37.24% | 49.68% |

It can be seen from the above Table 1 that when the pixels per inch (PPI) are increased from 217 to 342 as from the top row to the bottom row, that is, the pictures become more and more finer, the aperture rates of IPS-pro are reduced from about 49% down to about 25%; while the aperture rates of the present disclosure are decreased from about 60% to 37%. For any panel type listed in Table 1, the aperture rates of the present disclosure are always larger than those of IPS-pro by at least 21 % up to the highest about 50% as shown in the most right column, where the enhanced rates of the present disclosure is calculated as percentages equal to Aperture rates of the present disclosure/ Aperture rates of IPS-pro for each row in Table 1. It can be understood from the data shown in Table 1 that the technique of the present disclosure can effectively and largely enhance the aperture rates, especially for display panels with high fine pixel definition and accordingly can raise the entire brightness so as to elongate the battery using time of the portable electronic devices after battery recharge, since the back light source with lower power can be used to provide the equal entire brightness. At the same time, since the pixel aperture rates are enhanced, the black interval lines between pixels become narrower so that the displayed picture becomes finer.

Some embodiments of the present disclosure are described in the followings.

1. A display device comprises a metal layer; a common electrode disposed above the metal layer; a pixel electrode disposed above the common electrode; a liquid crystal layer disposed above the pixel electrode and the common electrode; and a protective layer disposed between the metal layer and the common electrode, and including one of a color translucent material and a transparent polymer material.

2. A display device of Embodiment 1 further comprises a data line; a gate line; and a thin film transistor, wherein the common electrode has a vertical projection partially overlapping the data line, the gate line and the thin film transistor.

3. A display device of Embodiment 1 further comprises a data line; a gate line; and a thin film transistor, wherein the common electrode has a vertical projection partially overlapping the data line and the thin film transistor and spaced from the gate line.

4. A display device of Claim 1, wherein when the protective layer includes the color translucent material, the protective layer has a thickness in a range of 1 to 5 micron, and the color translucent material allows only one selected from a group consisting of a red light, a green light, a blue light, a yellow light, a cyan light and a magenta light to pass.

5. A display device comprises a common electrode; a pixel electrode disposed above the common electrode; a liquid crystal layer disposed above the pixel electrode and the common electrode; and a passivation layer disposed between the pixel electrode and the common electrode, and including one of a color translucent material and a transparent polymer material.

6. A display device of 5 further comprises a data line; a gate line; and a thin film transistor, wherein the common electrode has a vertical projection partially overlapping the data line, the gate line and the thin film transistor.

7. A display device of Embodiment 5 further comprises a data line; a gate line; and a thin film transistor, wherein the common electrode has a vertical projection partially overlapping the data line and the thin film transistor and spaced from the gate line.

8. A display device of any one of the above embodiments, wherein when the passivation layer includes the color translucent material, the passivation layer has a thickness in a range of 1 to 5 micron, and the color translucent material allows only one selected from a group consisting of a red light, a green light, a blue light, a yellow light, a cyan light and a magenta light to pass.

9. A display device of any one of the above embodiments, wherein the pixel electrode includes plural first slits having an interval between adjacent two of the first slits, wherein each the first slits has a width and a ratio of the width to the interval, and the ratio is in a range of 0.55 to 1.35.

10. A display device comprises a common electrode; a pixel electrode disposed above the common electrode, and including plural first slits having an interval between adjacent two of the first slits, wherein each the first slits has a width and a ratio of the width to the interval, and the ratio is in a range of 0.55 to 1.35; and a liquid crystal layer disposed above the pixel electrode and the common electrode.

11. A display device of any one of the above embodiments further comprises a data line; and a thin film transistor, wherein the common electrode has a vertical projection partially overlapping the data line and the transistor.

12. A display device of any one of the above embodiments further comprises a metal layer disposed below the common electrode; a passivation layer disposed above the metal layer and the common electrode, and including one of a color translucent material and a transparent polymer material; and a protective layer disposed between the metal layer and the common electrode, and including one of the color translucent material and the transparent polymer material.

13. A display device of any one of the above embodiments, wherein when either one of the passivation layer and the protective layer includes the color translucent material, the protective layer has a thickness in a range of 1 to 5 micron, and the color translucent material allows only one selected from a group consisting of a red light, a green light, a blue light, a yellow light, a cyan light and a magenta light to pass.

14. A display device of any one of the above embodiments, wherein when either one of the passivation layer and the protective layer includes the transparent polymer material, the transparent polymer material includes one selected from a group consisting of a poly(methyl methacrylate), a polycarbonate and a poly(ethylene terephthalate).

15. A display device of any one of the above embodiments, wherein the common electrode has one of conditions of excluding any slit and including at least a second slit, and when the common electrode includes the second slit, the first slit has a vertical projection on the common electrode, and the projection is located outside the second slit.

## Claims

1. A display device (10), **characterized by** comprising:
a metal layer (M1);
a common electrode (11) disposed above the metal layer (M1);
a pixel electrode (12) disposed above the common electrode (11);
a liquid crystal layer (17) disposed above the pixel electrode (12) and the common electrode (11); and
a protective layer (15) disposed between the metal layer (M1) and the common electrode (11), and including one of a color translucent material and a transparent polymer material.

2. A display device of Claim 1, **characterized by** further comprising:
a data line (13);
a gate line (14); and
a thin film transistor (15), wherein the common electrode (11) has a vertical projection partially overlapping the data line (13), the gate line (14) and the thin film transistor (15).

3. A display device of Claim 1, **characterized by** further comprising:
a data line (13);
a gate line (14); and
a thin film transistor (15), wherein the common electrode (11) has a vertical projection partially overlapping the data line (13) and the thin film transistor (15) and spaced from the gate line.

4. A display device of Claim 1, **characterized in that** when the protective layer (15) includes the color translucent material, the protective layer (15) has a thickness in a range of 1 to 5 micron, and the color translucent material allows only one selected from a group consisting of a red light, a green light, a blue light, a yellow light, a cyan light and a magenta light to pass.

5. A display device of Claim 1, **characterized in that** when the protective layer (15) includes the transparent polymer material, the transparent polymer material includes one selected from a group consisting of a poly(methyl methacrylate), a polycarbonate and a poly(ethylene terephthalate).

6. A display device of Claim 1, **characterized in that** the pixel electrode (12) includes plural first slits (121, 221) having an interval (S) between adjacent two of the first slits (121, 221), wherein each the first slits (121, 221) has a width (W) and a ratio of the width (W) to the interval (S), and the ratio is in a range of 0.55 to 1.35.

7. A display device of Claim 6, **characterized in that** the common electrode (11) has one of conditions of excluding any slit and including at least a second slit (211), wherein when the common electrode (11) includes the second slit (211), the first slit (221) has a projection on the common electrode (11), and the projection is located outside the second slit (211).

8. A method for manufacturing a display device, **characterized by** comprising:
providing a metal layer (M1);
disposing a common electrode (11) above the metal layer (M1); and
disposing a protective layer (15) between the metal layer (M1) and the common electrode (11), wherein the protective layer (15) includes one of a color translucent material and a transparent polymer material.

9. A method of Claim 8, **characterized by** further comprising:
disposing a pixel electrode (12) above the common electrode (11); and
disposing a liquid crystal layer (17) above the pixel electrode (12) and the common electrode (11).

10. A method for filtering a light in a display device, **characterized by** comprising:
providing a metal layer (M1);
disposing a common electrode (11) above the metal layer (M1); and disposing a protective layer (15) between the metal layer (M1) and the common electrode (11), wherein the protective layer (15) includes a color translucent material to filter the light.

11. A method of Claim 10, **characterized in that** the color translucent material allows only the light being one selected from a group consisting of a red light, a green light, a blue light, a yellow light, a cyan light and a magenta light to pass through the protective layer (15).

12. A method of Claim 10, **characterized by** further comprising:
disposing a pixel electrode (12) above the common electrode (11).

13. A method of Claim 12, **characterized by** further comprising:
disposing a passivation layer (16) between the pixel electrode (12) and the common electrode (11), wherein the passivation layer (16) includes one of a color translucent material and a transparent polymer material, and when the passivation layer (16) includes the color translucent material, the passivation layer (16) has a thickness in a range of 1 to 5 micron.

14. A method of Claim 12, **characterized in that** the pixel electrode (12) includes plural first slits (121, 221) having an interval (S) between adjacent two of the first slits (121, 221), wherein each of the first slits (121, 221) has a width (W), and a ratio of the width (W) to the interval (S), and the ratio is in a range of 0.55 to 1.35.

15. A method of Claim 10, **characterized in that** the protective layer (15) has a thickness in a range of 1 to 5 micron.
